# EUROPEAN PATENT APPLICATION

(11) **EP 4 685 895 A1**
(43) Date of publication of application: **28.01.2026**
(21) Application number: 25158538.6
(22) Date of filing: 18.02.2025
(51) Int. Cl.: H01M 10/04, H01M 10/0562, H01M 10/0585, H01M 10/42, H01M 10/52, H01M 50/103, H01M 50/392, H01M 10/6555

(54) **ALL-SOLID-STATE BATTERY**

(30) Priority: 24.07.2024 CN 202421770485 U; 06.09.2024 WO PCT/CN2024/117437
(71) Applicant: Eve Energy Co., Ltd., Huizhou, Guangdong 516006 (CN)
(72) Inventor: CHEN, Guiwei, Huizhou, 516006 (CN); ZHANG, Dianzheng, Huizhou, 516006 (CN); JI, Yajuan, Huizhou, 516006 (CN); ZHAO, Ruirui, Huizhou, 516006 (CN)
(74) Representative: Tiburzi, Andrea

(57) **Abstract**

Provided is an all-solid-state battery. The all-solid-state battery includes an encapsulation member (10), a cell assembly (20), and an adsorbent. A first chamber (12) and a second chamber (15) that communicate with each other are formed within the encapsulation member (10). The cell assembly (20) is accommodated in the first chamber (12). The adsorbent is accommodated in the second chamber (15) and can adsorb or eliminate hydrogen sulfide. A waterproof and breathable membrane (50) is disposed between the first chamber (12) and the second chamber (15).

## Description

### TECHNICAL FIELD

The present application relates to the field of battery technology, for example, an all-solid-state battery.

### BACKGROUND

Sulfide all-solid-state batteries enjoy great prospects because they may have high energy density, greater durability, and longer service life. However, sulfide materials have poor chemical stability and are sensitive to moisture in the air. Therefore, when electrolytes are exposed to moisture due to sealing failures or other reasons during the operation of the sulfide all-solid-state batteries, highly toxic hydrogen sulfide gases are highly likely to be generated, which poses a great threat to users' personal safety. Although electrolyte materials may be made in a moisture-controlled environment, it is almost impossible to completely prevent the electrolytes from communicating with the external environment or to limit the exposure to moisture over time during actual applications. Therefore, it is necessary to introduce hydrogen sulfide protection structures into the system to eliminate hydrogen sulfide that may be generated during long-term use. Generally, hydrogen sulfide is contained and managed by adding hydrogen sulfide adsorption structures to the accommodation spaces of cell assemblies. Since hydrogen sulfide adsorption substances have the best adsorption effect when being manufactured into the shape of powder, it is necessary to use bearing structures, such as sponges, to bear the powder. To minimize the occupation of the accommodation spaces of the cell assemblies, the amount of the borne adsorbed powder is often not too large.

However, due to high fluidity of a hydrogen sulfide gas and the fact that the content of hydrogen sulfide being from 50 ppm to 120 ppm causes olfactory paralysis in people who contact it and that the content of hydrogen sulfide being 400 ppm causes death in a short period, if the amount of the adsorbed powder is insufficient, a certain amount of hydrogen sulfide may still leak. In addition, if the powdered hydrogen sulfide adsorption substances fall on the cell assemblies, the electrical performance of the cell assemblies is affected.

### SUMMARY

The present application provides an all-solid-state battery that can ensure that sufficient sulfide adsorption substances are placed within the battery and prevent the sulfide adsorption substances from contacting cells, thereby ensuring that the performance of the battery is not affected.

The all-solid-state battery includes an encapsulation member, a cell assembly, and an adsorbent, where a first chamber and a second chamber that communicate with each other are formed within the encapsulation member; the cell assembly is accommodated in the first chamber, the adsorbent is accommodated in the second chamber and configured to adsorb or eliminate hydrogen sulfide, and a waterproof and breathable membrane is disposed between the first chamber and the second chamber.

The present application has the beneficial effects below.

In the all-solid-state battery provided in the present application, the first chamber and the second chamber are spaced apart and communicate with each other, the cell assembly is accommodated within the first chamber, and the adsorbent is accommodated within the second chamber so that the second chamber can have a sufficient space to place the adsorbent, thereby ensuring sufficient adsorption or elimination of the hydrogen sulfide and preventing the hydrogen sulfide from being unable to react and overflowing. In addition, since the first chamber and the second chamber are spaced apart, and the waterproof and breathable membrane is disposed between the first chamber and the second chamber, a gas can freely shuttle between the first chamber and the second chamber, the hydrogen sulfide can enter the second chamber and be adsorbed by the adsorbent, but a liquid or solid cannot pass through the waterproof and breathable membrane so that the adsorbent located in the second chamber cannot enter the first chamber, thereby avoiding contact between the adsorbent and the cell assembly in the first chamber and further preventing the electrical performance of the battery from being decreased due to the contact between the adsorbent and the cell assembly.

### BRIEF DESCRIPTION OF THE DRAWINGS

FIG. 1 is a cross-sectional view of an all-solid-state battery at a cross-sectional position according to an embodiment of the present application.
FIG. 2 is a sectional view of an all-solid-state battery at a longitudinal section position according to an embodiment of the present application.
FIG. 3 is a sectional view of an all-solid-state battery at a longitudinal section position in the X direction according to an embodiment of the present application.
FIG. 4 is a sectional view of an all-solid-state battery at a longitudinal section position in the Y direction according to an embodiment of the present application.

### Reference list

- 10: encapsulation member
- 11: channel
- 12: first chamber
- 13: first encapsulation layer
- 131: first groove
- 14: second encapsulation layer
- 141: second groove
- 15: second chamber
- 20: cell assembly
- 21: cell
- 22: heat dissipation layer
- 23: positive electrode
- 24: negative electrode
- 30: total positive electrode
- 40: total negative electrode
- 50: waterproof and breathable membrane

### DETAILED DESCRIPTION

The present application is described below in conjunction with drawings and embodiments. The embodiments described herein are intended to explain the present application and not to limit the present application. Additionally, it is to be noted that for ease of description, only part, not all, of structures related to the present application are illustrated in the drawings.

In the description of the present application, the terms "joined", "connected", and "secured" are to be understood in a broad sense unless otherwise expressly specified and limited. For example, the term "connected" may refer to "securely connected", "detachably connected", or "integrated", may refer to "mechanically connected" or "electrically connected", may refer to "connected directly" or "connected indirectly through an intermediary", or may refer to "connected inside two elements" or "an interaction relation between two elements". For those of ordinary skill in the art, meanings of the preceding terms in the present application may be understood based on situations.

In the present application, unless otherwise expressly specified and limited, when a first feature is described as "on" or "under" a second feature, the first feature and the second feature may be in direct contact or may be in indirect contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is at a higher level than the second feature. When the first feature is described as "under", "below", or "underneath" the second feature, the first feature is right under, below, or underneath the second feature, the first feature is obliquely under, below, or underneath the second feature, or the first feature is at a lower level than the second feature.

In the description of this embodiment, orientations or position relations indicated by terms such as "above", "below", "left", and "right" are based on the drawings. These orientations or position relations are intended only to facilitate the description and simplify the operation and not to indicate or imply that a device or element referred to must have such particular orientations or must be configured or operated in such particular orientations. Thus, these orientations or position relations are not to be construed as limiting the present application. In addition, the terms "first" and "second" are used for distinguishing between descriptions and have no special meanings.

Substances in electrolytes of solid-state batteries are prone to react with water to generate toxic hydrogen sulfide gases. The amount of hydrogen sulfide adsorption substances provided in the related art is insufficient, but there is still a risk of leakage of a small amount of the hydrogen sulfide gases. Although the amount is small, it is enough to cause poisoning or even death to a human body. Moreover, when the hydrogen sulfide adsorption substances are placed in the shape of powder, if the hydrogen sulfide adsorption substances contact cell assemblies, the electrical performance of the batteries is prone to decrease.

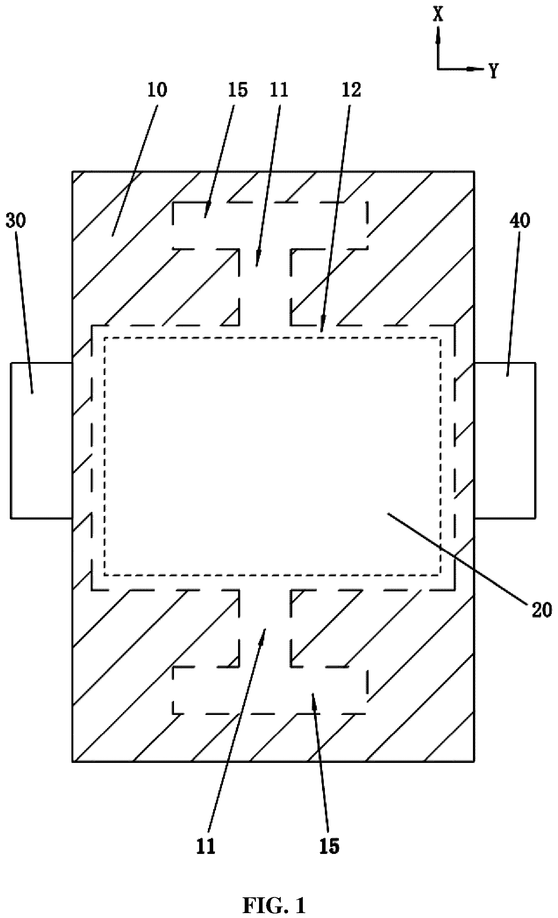

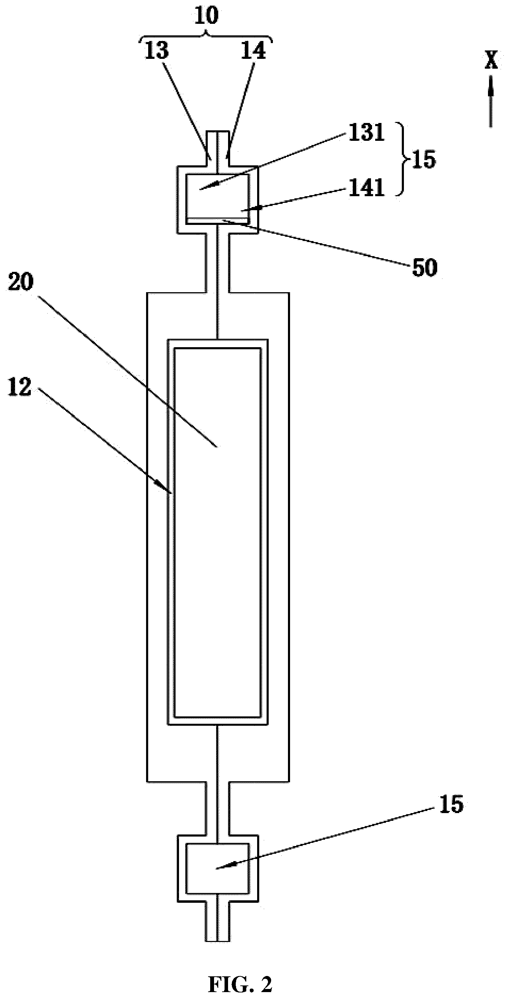

This embodiment provides an all-solid-state battery that can ensure that sufficient sulfide adsorption substances are placed within the battery and prevent the sulfide adsorption substances from contacting cells 21, thereby ensuring that the performance of the battery is not affected. As shown in FIGS. 1 and 2, the all-solid-state battery includes an encapsulation member 10, a cell assembly 20, and an adsorbent. A first chamber 12 and a second chamber 15 that communicate with each other are formed within the encapsulation member 10. The cell assembly 20 is accommodated in the first chamber 12. The adsorbent is accommodated in the second chamber 15 and can adsorb or eliminate hydrogen sulfide. A waterproof and breathable membrane 50 is disposed between the first chamber 12 and the second chamber 15.

The first chamber 12 and the second chamber 15 are spaced apart and communicate with each other, the cell assembly 20 is accommodated within the first chamber 12, and the adsorbent is accommodated within the second chamber 15 so that the second chamber 15 can have a sufficient space to place the adsorbent, thereby ensuring sufficient adsorption or elimination of the hydrogen sulfide and preventing the hydrogen sulfide from being unable to react and overflowing. In addition, since the first chamber 12 and the second chamber 15 are spaced apart, and the waterproof and breathable membrane 50 is disposed between the first chamber 12 and the second chamber 15, a gas can freely shuttle between the first chamber 12 and the second chamber 15, the hydrogen sulfide can enter the second chamber 15 and be adsorbed by the adsorbent, but a liquid or solid cannot pass through the waterproof and breathable membrane 50 so that the adsorbent located in the second chamber 15 cannot enter the first chamber 12, thereby avoiding contact between the adsorbent and the cell assembly 20 in the first chamber 12 and further preventing the electrical performance of the battery from being decreased due to the contact between the adsorbent and the cell assembly 20.

The adsorbent is in the shape of powder. The contact surface area between the powdered adsorbent and the gas is larger. When adsorbents are equal in amount, the powdered adsorbent can adsorb or eliminate more hydrogen sulfide than adsorbents in other shapes. Certainly, in other embodiments, the adsorbent may also be in the shape of a block such as a cube or a cylinder, and the shape is not limited herein.

A channel 11 is disposed between the first chamber 12 and the second chamber 15. The waterproof and breathable membrane 50 is disposed within the channel 11. The channel 11 is provided with two openings facing the first chamber 12 and the second chamber 15 respectively. The waterproof and breathable membrane 50 covers at least one opening of the channel 11. A position may be provided for mounting the waterproof and breathable membrane 50.

The waterproof and breathable membrane 50 is bonded to the sidewall of the first chamber 12 and/or the sidewall of the second chamber 15 to cover the at least one opening of the channel 11. The waterproof and breathable membrane 50 is bonded to the sidewall of one side of the first chamber 12 corresponding to the channel 11 and/or the sidewall of one side of the second chamber 15 corresponding to the channel 11, that is, to cover the channel 11.

In this embodiment, as shown in FIG. 2, the waterproof and breathable membrane 50 is bonded to the side of the second chamber 15. In other embodiments, the waterproof and breathable membrane 50 may also be bonded to the side of the first chamber 12, which is not limited herein.

The waterproof and breathable membrane 50 is a PTFE membrane, that is, a polytetrafluoroethylene membrane, which can effectively block the adsorbent within the second chamber 15 and also allow a hydrogen sulfide gas to enter the second chamber 15 to react with the adsorbent.

The encapsulation member 10 is rectangular. A total positive electrode 30 and a total negative electrode 40 protrude from two opposite sides of the encapsulation member 10 along the first direction (the X direction in the figure) respectively. The total positive electrode 30 and the total negative electrode 40 are both electrically connected to the cell assembly 20. Two opposite sides of the encapsulation member 10 along the second direction (the Y direction in the figure, and the Y direction is vertical to the X direction) are provided with two second chambers 15 respectively. Each second chamber 15 communicates with the first chamber 12 and is correspondingly provided with the adsorbent. The total positive electrode 30, the total negative electrode 40, and parts of the encapsulation member 10 corresponding to the two second chambers 15 are independent of each other. This configuration is more convenient for manufacturing and processing. Moreover, when the total positive electrode 30 or the total negative electrode is disposed on a same side as the second chamber 15, the sealing width is insufficient to cause leakage. In addition, the position of the second chamber 15 is added so that the hydrogen sulfide gas overflowing from the first chamber 12 can enter a second chamber 15 close to the generated gas to react with the adsorbent, that is, the distance from the generation position of the hydrogen sulfide gas to the adsorption position of the hydrogen sulfide gas can be shortened.

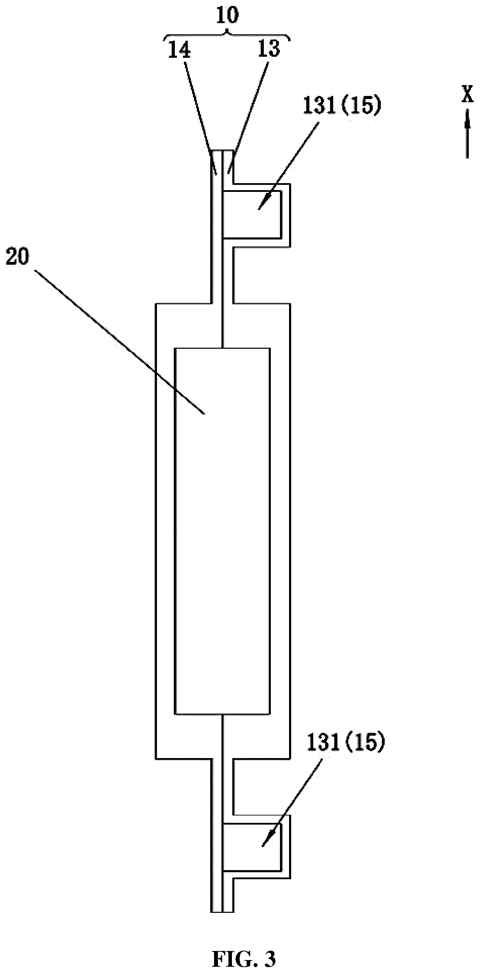

As shown in FIGS. 1 and 3, the encapsulation member 10 includes a first encapsulation layer 13 and a second encapsulation layer 14 that are interlocked. The first encapsulation layer 13 protrudes toward a side away from the second encapsulation layer 14 to form first grooves 131. The groove walls of the first grooves 131 and partial surfaces of one side of the second encapsulation layer 14 facing the first encapsulation layer 13 form the two second chambers 15 by joint enclosure respectively. When the all-solid-state battery is used, the second encapsulation layer 14 is placed upward, and the first encapsulation layer 13 is placed downward. Under the action of gravity, the adsorbents fall into the two second chambers 15 respectively. When filling the two second chambers 15 respectively, the adsorbents do not enter the first chamber 12 from the channel 11 between the first chamber 12 and the two second chambers 15, thereby preventing the adsorbents from scattering from the two second chambers 15 to the first chamber 12.

In another embodiment, as shown in FIG. 2, the second encapsulation layer 14 protrudes toward a side away from the first encapsulation layer 13 to form second grooves 141, and the groove walls of the first grooves 131 and the groove walls of the second grooves 141 form the two second chambers 15 respectively. The second chamber 15 may be as thick as the first chamber 12 in the thickness direction. The accommodation space of the second chamber 15 is appropriately increased, and the dimension of the encapsulation member 10 in the first direction may be appropriately reduced.

Substances that absorb water vapor may also be added to the adsorbents respectively so that water vapor can be prevented from entering the first chamber 12 from the two second chambers 15, fundamentally avoiding contact between the electrolytes and the water vapor and further preventing the hydrogen sulfide from being generated.

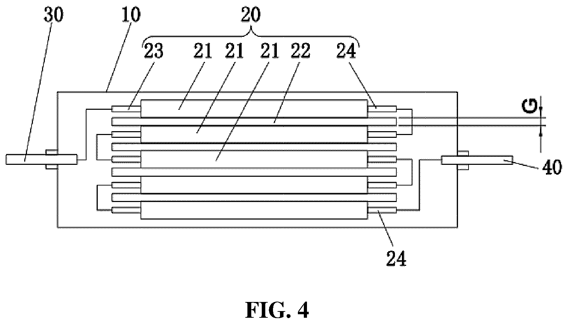

In addition, as shown in FIG. 4, the cell assembly 20 includes multiple cells 21, and each cell 21 has a positive electrode 23 and a negative electrode 24. Lithium metal in the negative electrode 24 reacts with oxygen to generate a lithium oxide. The lithium oxide is an insulating substance, which makes it impossible for lithium ions generating the lithium oxide to undergo ion exchange. In addition, sulfide in the electrolytes reacts with oxygen; oxygen replaces part of sulfur, resulting in a decrease in the conductivity, and oxygen can cause the electrolytes to be ignited under a high temperature condition.

Substances that absorb oxygen may also be added to the adsorbents to prevent oxygen from reacting with the lithium metal, prevent the sulfide from reacting with oxygen and prevent oxygen from becoming a combustion promoter that ignites the electrolytes.

For the all-solid-state battery, since the internal resistance is higher than that of a liquid battery, the all-solid-state battery has a serious temperature rise effect during fast charging and discharging, which is not conducive to the stable operation of the battery. Generally, a suitable heat dissipation layer 22 and a suitable heat insulation layer are disposed in the battery to play a temperature control role, but these layers are far away from the interior of the cell assembly 20, resulting in a poor heat conduction effect and making it difficult to meet the requirements.

As shown in FIG. 4, the cell assembly 20 includes multiple stacked cells 21, and the heat dissipation layer 22 is disposed between at least two adjacent cells 21 among the multiple cells 21. The heat dissipation layer 22 is disposed within the cell assembly 20 so that heat can be transferred from the interior of the cell assembly 20 to the surface of the cell assembly 20 more quickly, thereby maintaining the uniformity of the temperature of the cell assembly 20. Compared with a traditional laminated or wound battery, the heat dissipation effect is better, and a solid electrolyte does not have fluidity, thereby avoiding the risk of corroding the heat dissipation layer 22.

The heat dissipation layer 22 is a graphene aerogel layer, which may achieve the effect of uniform stress, and the transmission of an internal force of the cell assembly 20 is more controllable and consistent, which helps improve the cycle stability of the cell assembly 20.

As shown in FIG. 4, the thickness of the heat dissipation layer 22 is G, and 0.5 mm ≤ G ≤ 5 mm. When G > 5 mm, the overall thickness of the cell assembly 20 is thickened more noticeably, which is not conducive to the thinning of the thickness of the cell assembly 20. When G < 0.5 mm, the heat dissipation and uniform stress effects are poor. Therefore, the range of G is configured to be 0.5 mm ≤ G ≤ 5 mm. Exemplarily, the value of G may be 1 mm, 1.5 mm, 2 mm, 2.5 mm, 3 mm, 3.5 mm, 4 mm, or 4.5 mm. For example, 1 mm ≤ G ≤ 3 mm. For example, G = 1.2 mm. When the heat dissipation layer 22 is too thin, the heat dissipation layer 22 cannot withstand a volume expansion change in the cell assembly 20 during operation and is difficult to transmit the force evenly. If the heat dissipation layer 22 is too thick, serious deformation of aerogel is caused during the pressurization process of the battery, affecting the internal structure of the battery.

## Claims

1. An all-solid-state battery, comprising:
an encapsulation member (10), wherein a first chamber (12) and a second chamber (15) that communicate with each other are formed within the encapsulation member (10); and
a cell assembly (20) and an adsorbent, wherein the cell assembly (20) is accommodated in the first chamber (12), the adsorbent is accommodated in the second chamber (15) and configured to adsorb or eliminate hydrogen sulfide, and a waterproof and breathable membrane (50) is disposed between the first chamber (12) and the second chamber (15).

2. The all-solid-state battery of claim 1, wherein a channel (11) is disposed between the first chamber (12) and the second chamber (15), the waterproof and breathable membrane (50) is disposed within the channel (11), the channel (11) is provided with two openings facing the first chamber (12) and the second chamber (15) respectively, and the waterproof and breathable membrane (50) is configured to cover at least one of the two openings of the channel (11).

3. The all-solid-state battery of claim 2, wherein the waterproof and breathable membrane (50) is bonded to a sidewall of at least one of the first chamber (12) or the second chamber (15) to cover the at least one of the two openings of the channel (11).

4. The all-solid-state battery of any one of claims 1 to 3, wherein at least one of the following conditions is satisfied:
the encapsulation member (10) is circumferentially sealed; or
the adsorbent is in a shape of powder.

5. The all-solid-state battery of any one of claims 1 to 4, wherein the encapsulation member (10) is rectangular, and a total positive electrode (30) and a total negative electrode (40) are configured to protrude from two opposite sides of the encapsulation member (10) along a first direction respectively, wherein the total positive electrode (30) and the total negative electrode (40) are both electrically connected to the cell assembly (20); two opposite sides of the encapsulation member (10) along a second direction are provided with two second chambers (15) respectively, wherein each of the two second chambers (15) is configured to communicate with the first chamber (12) and correspondingly provided with the adsorbent.

6. The all-solid-state battery of any one of claims 1 to 5, wherein the encapsulation member (10) comprises a first encapsulation layer (13) and a second encapsulation layer (14), wherein the first encapsulation layer (13) and the second encapsulation layer (14) are configured to be interlocked, and the first encapsulation layer (13) is configured to protrude toward a side away from the second encapsulation layer (14) to form first grooves (131), wherein groove walls of the first grooves (131) and partial surfaces of a side of the second encapsulation layer (14) facing the first encapsulation layer (13) are configured to form the two second chambers (15) by joint enclosure respectively.

7. The all-solid-state battery of claim 6, wherein the second encapsulation layer (14) is configured to protrude toward a side away from the first encapsulation layer (13) to form second grooves (141), wherein the groove walls of the first grooves (131) and groove walls of the second grooves (141) are configured to form the two second chambers (15) by joint enclosure respectively.

8. The all-solid-state battery of any one of claims 1 to 7, wherein the cell assembly (20) comprises a plurality of stacked cells (21), and a heat dissipation layer (22) is disposed between at least two adjacent cells (21) among the plurality of stacked cells (21).

9. The all-solid-state battery of claim 8, wherein the heat dissipation layer (22) is a graphene aerogel layer.

10. The all-solid-state battery of claim 8 or 9, wherein a thickness of the heat dissipation layer (22) is G, wherein 0.5 mm ≤ G ≤ 5 mm.
